(19) Europäisches Patentamt
European Patent Office
Office européen des brevets

(11) **EP 3 837 450 B1**

(12) **EUROPÄISCHE PATENTSCHRIFT**

(45) Veröffentlichungstag und Bekanntmachung des Hinweises auf die Patenterteilung:
04.10.2023 Patentblatt 2023/40

(21) Anmeldenummer: **19755368.8**

(22) Anmeldetag: **15.08.2019**

(51) Internationale Patentklassifikation (IPC):
**F16C 33/34** (2006.01)  **F16C 19/26** (2006.01)
**F03D 80/70** (2016.01)

(52) Gemeinsame Patentklassifikation (CPC):
**F16C 19/26; F16C 33/34;** F03D 80/70;
F05B 2240/50; F16C 2240/50; F16C 2300/14;
F16C 2360/31

(86) Internationale Anmeldenummer:
**PCT/EP2019/071944**

(87) Internationale Veröffentlichungsnummer:
**WO 2020/035568 (20.02.2020 Gazette 2020/08)**

(54) **WÄLZKÖRPER MIT ASYMMETRISCHER ROLLENPROFILIERUNG, WÄLZLAGER, WINDKRAFTANLAGE UND VERFAHREN ZUR GEOMETRISCHEN DIMENSIONIERUNG VON WÄLZKÖRPERN**

ROLLING ELEMENT HAVING AN ASYMMETRICAL ROLLER PROFILE, ROLLING ELEMENT BEARING, WIND TURBINE AND METHOD FOR GEOMETRICALLY DIMENSIONING ROLLING ELEMENTS

CORPS ROULANT À PROFILAGE ASYMÉTRIQUE DE GALETS, PALIER À ROULEMENT, ÉOLIENNE ET PROCÉDÉ POUR LE DIMENSIONNEMENT GÉOMÉTRIQUE DE CORPS ROULANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2018 DE 102018213951**

(43) Veröffentlichungstag der Anmeldung:
**23.06.2021 Patentblatt 2021/25**

(73) Patentinhaber:
• **thyssenkrupp rothe erde Germany GmbH**
**44137 Dortmund (DE)**
• **thyssenkrupp AG**
**45143 Essen (DE)**

(72) Erfinder:
• **RAPPOLD, Jens**
**59821 Arnsberg (DE)**
• **MÖLLENHOFF, Julian**
**59510 Lippetal-Lippborg (DE)**
• **SCHLÜTER, David**
**59609 Anröchte (DE)**

(74) Vertreter: **thyssenkrupp Intellectual Property GmbH**
**ThyssenKrupp Allee 1**
**45143 Essen (DE)**

(56) Entgegenhaltungen:
**EP-A1- 1 035 339     JP-A- 2006 052 789**

• **DIN: "DIN 26281:2010-11 Wälzlager - Dynamische Tragzahlen und nominelle Lebensdauer-Berechnung der modifizierten nominellen Referenz-Lebensdauer für Wälzlager (ISO/TS 16281:2008 + Cor. 1:2009)", DIN NORM, 1. November 2010 (2010-11-01), Seiten 1-25, XP009515926, DOI: 10.31030/1721774 in der Anmeldung erwähnt**
• **HIROKI FUJIWARA ET AL: "Logarithmic profiles of rollers in roller bearings and optimizattion of the profiles", INTERNET CITATION, 1. Januar 2007 (2007-01-01), Seiten 140-148, XP002783384, Gefunden im Internet: URL:https://www.ntnglobal.com/en/products/ review/pdf/NTN_TR75_en_P140.pdf [gefunden am 2019-09-10]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Stand der Technik**

Die vorliegende Erfindung geht aus von Wälzkörpern für Wälzlager, insbesondere Großwälzlager. Aus dem Stand der Technik sind Wälzkörper für Wälzlager mit unterschiedlichen Profilen bekannt. Dies sind beispielsweise das zylindrische Profil, das ballige Profil, das zylindrisch-ballige Profil oder das logarithmische Profil.

Die genannten Profile finden sich im Stand der Technik sowohl auf Kegelrollen als auch auf Zylinderrollen.

Die Ausbildung und Formgebung von Kegelrollen erfolgt typischerweise entsprechend der deutschen DIN-Norm 26281. In der DIN-Norm 26281 von November 2010 wird in den Abschnitten 5.5.3 und 6.5 die Ausbildung des Rollenprofils der Kegelrolle eines Kegelrollenlagers durch eine Profilfunktion beschrieben.

Was vielen der aus dem Stand der Technik bekannten Profilen gemein ist, ist dass sie stets symmetrisch bezogen auf die Mitte der Rolle sind. Können die Wälzkörper mit den bekannten Profilen im Betriebslastfall, das heißt bei gleichmäßiger mittiger Belastung, die auf sie wirkenden Lasten noch passabel abführen, so wird die Abführung der auf die Wälzkörper wirkenden Lasten in Situationen kritisch, in denen die Last nicht mittig auf die Wälzkörper wirkt. In diesen Fällen kommt es zu unerwünschtem Kantentragen und damit zu hohen Flächenpressungen und erhöhtem Verschleiß an den Kontaktbereichen zwischen Wälzkörper und Wälzkörperlaufbahnen eines Wälzlagers.

In der Druckschrift JP 2006 052789 A wird offenbart, dass bei einem Wälzkörperprofil zu beiden Seiten eines auf der Profilkurve angeordneten Bezugspunkts ein asymmetrischer Profilkurvenverlauf vorgesehen werden kann, d.h. dass zu beiden Seiten des Bezugspunktes unterschiedliche Verläufe der Profilkurve vorliegen. Bei derartigen Wälzkörpern können im Betrieb im Übergangsbereich zwischen den unterschiedlichen Profilkurvenabschnitten hohe Flächenpressungen auftreten. Dadurch kann es zu einem erhöhten Verschleiß des Wälzlagers und zu vorzeitigem Versagen der Wälzkörper kommen, so dass die geforderte Lebensdauer des Wälzlagers nicht erreicht wird.

**Offenbarung der Erfindung**

Der Erfindung liegt die technische Aufgabe zugrunde, einen Wälzkörper bereitzustellen, der die geschilderten Nachteile des Standes der Technik nicht aufweist, sondern eine hohe Lebensdauer im Betriebslastfall bietet und gleichzeitig hohe Flächenpressungen auch bei nicht mittig auf den Wälzkörper einwirkenden Kräften vermeidet.

Diese Aufgabe wird gelöst durch einen Wälzkörper zur Verwendung in Wälzlagern, insbesondere in Großwälzlagern, wobei der Wälzkörper im unbelasteten Zustand ein logarithmisches Profil aufweist, wobei das Profil zumindest teilweise der Profilfunktion

$$
P(x) = \begin{cases} c_1 \cdot D_{we} \cdot \log \dfrac{1}{1 - \left(\dfrac{2 \cdot x}{L_{we}}\right)^2} & \text{für } x \leq x_{grenz} \\[4ex] c_2 \cdot D_{we} \cdot \log \dfrac{1}{1 - \left(\dfrac{2 \cdot x}{L_{we}}\right)^2} & \text{für } x > x_{grenz} \end{cases}
$$

genügt, wobei $D_{we}$ dem maximalen Durchmesser des Wälzkörpers entspricht und $L_{we}$ der effektiven Länge des Wälzkörpers entspricht, wobei $c_1$ ein erster Logarithmuskoeffizient ist, wobei $c_2$ ein zweiter Logarithmuskoeffizient ist, wobei $x_{grenz}$ eine Übergangskonstante ist, dadurch gekennzeichnet, dass $c_1$ und $c_2$ unterschiedliche Werte aufweisen, wobei der erste Logarithmuskoeffizient $c_1$ eine von $x$ abhängige Funktion $c_1 = c_1(x)$ ist.

Der erfindungsgemäße Wälzkörper ermöglicht durch eine um die Übergangskonstante $x_{grenz}$ asymmetrische Ausführung der Profilfunktion des Profils eine Anpassung der geometrischen Form des Wälzkörpers an zu erwartende Lasten. Der Wälzkörper bietet einerseits bei $x > x_{grenz}$ einen Bereich mit einem beispielsweise flachen Profil für eine Verbesserung der Lebensdauer im Betriebslastfall, das heißt bei gleichmäßiger mittiger Belastung und andererseits bei $x \leq x_{grenz}$ einen Bereich mit einem beispielsweise steilen Profil für die Vermeidung von Kantenlaufen im Extremlastfall, das heißt bei Verkippungen.

Profil des Wälzkörpers bedeutet in Sinne der vorliegenden Erfindung die Projektion der Mantelfläche des Wälzkörpers auf eine Projektionsebene parallel zur Drehachse des Wälzkörpers, wobei nur der Teil der Projektion betrachtet wird, der auf einer Seite einer Schnittgeraden der Projektionsebene mit einer Schnittebene liegt, wobei die Schnittebene parallel zur Drehachse des Wälzkörpers und orthogonal zur Projektionsebene angeordnet ist. Die x-Koordinate läuft im Sinne der vorliegenden Erfindung parallel zur Drehachse des Wälzkörpers. Die Profilfunktion gibt das Profil des Wälzkörpers in Millimetern an. Die effektive Länge des Wälzkörpers, der maximale Durchmesser des Wälzkörpers und die x-Koordinate werden in Millimetern angegeben. Kleine Logarithmuskoeffizienten bewirken dabei eher flache Profilfunktionen, während große Logarithmuskoeffizienten eher steile Profilfunktionen bewirken.

Erfindungsgemäß ist vorgesehen, dass der erste Logarithmuskoeffizient $c_1$ eine von x abhängige Funktion $c_1 = c_1(x)$ ist. Dies ermöglicht eine vorteilhafte Geometrie am Übergang zwischen dem Bereich der Profilfunktion mit dem ersten Logarithmuskoeffizienten und dem Bereich der Profilfunktion mit dem zweiten Logarithmuskoeffizienten.

Denkbar ist beispielsweise, dass der erste Logarithmuskoeffizient $c_1$ der Funktion

$$c_1(x) = \frac{m}{1 + c_{basis} * x}$$

genügt, wobei m eine Konstante ist und $c_{basis}$ ein weiterer Logarithmuskoeffizient ist. Denkbar ist weiterhin, dass m = $c_{basis}$ ist.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Übergangskonstante $x_{grenz}$ ungleich 0 ist. Dies ermöglicht, das Profil des Wälzkörpers nicht nur asymmetrisch bezüglich der Mitte des Wälzkörpers auszuführen, sondern den Übergang zwischen dem Bereich der Profilfunktion mit dem ersten Logarithmuskoeffizienten und dem Bereich der Profilfunktion mit dem zweiten Logarithmuskoeffizienten außermittig zu gestalten, was eine exzellente Anpassbarkeit an zu erwartende mechanischen Belastungen, insbesondere Verkippungen, ermöglicht. Ein entsprechend gestalteter Wälzkörper bietet damit in vorteilhafter Weise größere flache Bereiche des Profils für hohe Lebensdauern im Betriebslastfall bei gleichzeitig steilen Bereichen des Profils zur Vermeidung von hohen Flächenpressungen im Extremlastfall.

Mitte bedeutet im Sinne der vorliegenden Erfindung die x-Koordinate, von der die beiden Enden der effektiven Länge des Wälzkörpers jeweils $L_{we}/2$ entfernt sind.

Gemäß einer weiteren bevorzugten Ausführungsform der vorliegenden Erfindung ist vorgesehen, dass der erste Logarithmuskoeffizient $c_1$ abhängig vom zweiten Logarithmuskoeffizienten $c_2$ ist. Dies ermöglicht eine besonders vorteilhafte Geometrie am Übergang zwischen dem Bereich der Profilfunktion mit dem ersten Logarithmuskoeffizienten und dem Bereich der Profilfunktion mit dem zweiten Logarithmuskoeffizienten.

Gemäß einer weiteren bevorzugten Ausführungsform der vorliegenden Erfindung ist vorgesehen, dass der erste Logarithmuskoeffizient $c_1$ der Funktion

$$c_1(x) = \frac{c_{basis}}{1 + \frac{\frac{c_{basis}}{c_2} - 1}{S_k} * (k * x + a)}$$

genügt, wobei $S_k$, k, a und $c_{basis}$ Konstanten sind.

Dies ermöglicht auf vorteilhafte Weise weiche Übergänge zwischen dem Bereich der Profilfunktion mit dem ersten Logarithmuskoeffizienten und dem Bereich der Profilfunktion mit dem zweiten Logarithmuskoeffizienten. Sprünge, Knicke oder unstetige Stellen in der Profilfunktion können so vermieden werden.

$S_k$ ist ein Skalierungsfaktor, mit welchem die Profilfunktion flacher oder steiler gewählt werden kann. k ist eine weitere Konstante. Denkbar ist, dass $S_k$, k, a und $c_{basis}$ Abhängigkeiten, insbesondere Abhängigkeiten von x, $c_2$, $L_{we}$ und/oder $D_{we}$ aufweisen, also Funktionen sind.

Gemäß einer weiteren bevorzugten Ausführungsform der vorliegenden Erfindung ist vorgesehen, dass $c_2$ und $c_{basis}$ ungleich eines Referenzlogarithmuskoeffizienten $c_0$ von 0,00045 sind. Vorteilhafterweise kann durch die Wahl eines jeweiligen entsprechenden Wertes für $c_2$ und $c_{basis}$ eine für den Wälzkörper zu erwartende Belastungssituation berücksichtigt werden.

Gemäß einer weiteren bevorzugten Ausführungsform der vorliegenden Erfindung ist vorgesehen, dass $c_2$ zwischen 0,00005 und 0,0004, vorzugsweise zwischen 0,0001 und 0,0003 und besonders bevorzugt bei im Wesentlichen 0,0002 liegt. Es hat sich gezeigt, dass ein Logarithmuskoeffizient innerhalb der vorstehend definierten Bereiche insbesondere für Wälzkörper von Kegel- oder Zylinderrollenlagern besonders vorteilhaft ist, welche im Betriebslastfall eine hohe Lebensdauer aufweisen sollen. Dies wird durch kleine Logarithmuskoeffizienten und damit flache Profile erreicht.

Gemäß einer weiteren bevorzugten Ausführungsform der vorliegenden Erfindung ist vorgesehen, dass $c_{basis}$ zwischen 0,0005 und 0,0009, vorzugsweise zwischen 0,0006 und 0,0008 und besonders bevorzugt im Wesentlichen bei 0,0007 liegt und/oder *k* zwischen 1,5 und 2,5, bevorzugt zwischen 1,75 und 1,95 und besonders bevorzugt im Wesentlichen bei 1,838239 liegt und/oder $S_k$ zwischen 10 und 100, vorzugsweise zwischen 30 und 50 und besonders bevorzugt im Wesentlichen bei 40 liegt und/oder a zwischen 50 und 200, bevorzugt zwischen 80 und 150 und besonders bevorzugt im Wesentlichen bei 101 liegt.

Es hat sich gezeigt, dass ein Logarithmuskoeffizient innerhalb der vorstehend definierten Bereiche für $c_2$ insbesondere für Wälzkörper von Kegel- oder Zylinderrollenlagern besonders vorteilhaft ist, welche hohe Lastspitzen aufzunehmen haben und im Extremlastfall laufen sollen. Dies wird durch große Logarithmuskoeffizienten und damit steile Profile erreicht.

Ein weiterer Gegenstand der vorliegenden Erfindung zur Lösung der eingangs gestellten Aufgabe ist ein Wälzlager, insbesondere Großwälzlager, aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring Wälzkörper gemäß einem der vorhergehenden Ansprüche angeordnet sind.

Ein weiterer Gegenstand der vorliegenden Erfindung zur Lösung der eingangs gestellten Aufgabe ist ein Verfahren zur geometrischen Dimensionierung eines Wälzkörpers für Wälzlager, insbesondere eines Wälzkörpers für Großwälzlager, wobei als Profil des Wälzkörpers im unbelasteten Zustand ein logarithmisches Profil gewählt wird, wobei als Profilfunktion zumindest eines Teils des Profils

$$P(x) = \begin{cases} c_1 \cdot D_{we} \cdot \log \dfrac{1}{1 - \left(\dfrac{2 \cdot x}{L_{we}}\right)^2} & \text{für } x \leq x_{grenz} \\[4ex] c_2 \cdot D_{we} \cdot \log \dfrac{1}{1 - \left(\dfrac{2 \cdot x}{L_{we}}\right)^2} & \text{für } x > x_{grenz} \end{cases}$$

gewählt wird, wobei $D_{we}$ dem maximalen Durchmesser des Wälzkörpers entspricht und $L_{we}$ der effektiven Länge des Wälzkörpers entspricht, wobei $c_1$ ein erster Logarithmuskoeffizient ist, wobei $c_2$ ein zweiter Logarithmuskoeffizient ist, wobei $x_{grenz}$ eine Übergangskonstante ist, dadurch gekennzeichnet, dass für $c_1$ und $c_2$ unterschiedliche auf zu erwartende Belastungssituationen angepasste Werte gewählt werden, wobei für den ersten Logarithmuskoeffizienten $c_1$ eine von $x$ abhängige Funktion $c_1 = c_1(x)$ gewählt wird.

Das erfindungsgemäße Verfahren ermöglicht es, einen Wälzkörper so zu dimensionieren, dass durch dessen um die Übergangskonstante $x_{grenz}$ asymmetrische Dimensionierung zu erwartende Lasten gleichmäßig und den Wälzkörper schonend über einen dem Betriebslastfall mit einem flachen Profil angepassten Bereich und einen dem Extremlastfall mit einem steilen Profil angepassten Bereich abgeführt werden können.

Erfindungsgemäß ist vorgesehen, dass für den ersten Logarithmuskoeffizienten $c_1$ eine von $x$ abhängige Funktion $c_1 = c_1(x)$ gewählt wird.

Dies ermöglicht eine vorteilhafte geometrische Dimensionierung am Übergang zwischen dem Bereich der Profilfunktion mit dem ersten Logarithmuskoeffizienten und dem Bereich der Profilfunktion mit dem zweiten Logarithmuskoeffizienten. Denkbar ist beispielsweise, dass der erste Logarithmuskoeffizient $c_1$ der Funktion

$$c_1(x) = \frac{m}{1 + c_{basis} * x}$$

genügend gewählt wird, wobei m eine Konstante ist und $c_{basis}$ ein weiterer Logarithmuskoeffizient ist. Denkbar ist weiterhin, dass m = $c_{basis}$ gewählt wird.

Gemäß einer bevorzugten Ausführungsform der vorliegenden Erfindung ist vorgesehen, dass die Übergangskonstante $x_{grenz}$ ungleich 0 gewählt wird und dass die Übergangskonstante $x_{grenz}$ auf zu erwartende Belastungssituationen angepasst wird.

Dies ermöglicht, das Profil des Wälzkörpers nicht nur asymmetrisch bezüglich der Mitte des Wälzkörpers zu dimensionieren, sondern den Übergang zwischen dem Bereich der Profilfunktion mit dem ersten Logarithmuskoeffizienten und dem Bereich der Profilfunktion mit dem zweiten Logarithmuskoeffizienten außermittig zu gestalten, was eine exzellente Anpassung an zu erwartende Belastungen, insbesondere einen breiten Bereich mit einem flachen Profil zur Verlängerung der Lebensdauer im Betriebslastfall und einen Bereich mit einem steilen Profil zur Vermeidung von Kantenlaufen im Extremlastfall ermöglicht.

Gemäß einer weiteren bevorzugten Ausführungsform der vorliegenden Erfindung ist vorgesehen, dass für den

ersten Logarithmuskoeffizienten $c_1$ eine vom zweiten Logarithmuskoeffizienten $c_2$ abhängige Funktion gewählt wird. Dies ermöglicht eine besonders vorteilhafte geometrische Dimensionierung des Wälzkörpers am Übergang zwischen dem Bereich der Profilfunktion mit dem ersten Logarithmuskoeffizienten und dem Bereich der Profilfunktion mit dem zweiten Logarithmuskoeffizienten.

Gemäß einer weiteren bevorzugten Ausführungsform der vorliegenden Erfindung ist vorgesehen, dass der erste Logarithmuskoeffizient $c_1$ als der Funktion

$$c_1(x) = \frac{c_{basis}}{1 + \frac{\frac{c_{basis}}{c_2} - 1}{S_k} * (k * x + a)}$$

genügend gewählt wird, wobei $S_k$, $k$, $a$ und $c_{basis}$ Konstanten sind.

Dies ermöglicht auf vorteilhafte Weise die geometrische Dimensionierung weicher Übergänge zwischen dem Bereich der Profilfunktion mit dem ersten Logarithmuskoeffizienten und dem Bereich der Profilfunktion mit dem zweiten Logarithmuskoeffizienten. Sprünge, Knicke oder unstetige Stellen in der Profilfunktion können so vermieden werden.

$S_k$ ist ein Skalierungsfaktor, mit welchem die Profilfunktion flacher oder steiler gewählt werden kann. $k$ ist eine weitere Konstante.

Ein weiterer Gegenstand der vorliegenden Erfindung zur Lösung der eingangs gestellten Aufgabe ist eine Windkraftanlage aufweisend ein Wälzlager gemäß Anspruch 8.

Alle vorstehenden Ausführungen unter "Offenbarung der Erfindung" gelten gleichermaßen für den erfindungsgemäßen Wälzkörper, das erfindungsgemäße Wälzlager, das erfindungsgemäße Verfahren zur geometrischen Dimensionierung eines Wälzkörpers und die erfindungsgemäße Windkraftanlage.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

**Kurze Beschreibung der Zeichnungen**

| | |
|---|---|
| Figuren 1 (a) - (d) | zeigen jeweils schematisch Profilfunktionen von Wälzkörpern nach dem Stand der Technik sowie gemäß einer nicht von den Ansprüchen umfassten Ausführungsform der vorliegenden Erfindung. |
| Figur 1 (e) | zeigt schematisch eine Profilfunktion eines Wälzkörpers gemäß einer beispielhaften Ausführungsform der vorliegenden Erfindung. |
| Figur 2 | zeigt schematisch einen Wälzkörper gemäß einer beispielhaften Ausführungsform der vorliegenden Erfindung. |
| Figur 3 | zeigt schematisch ein Wälzlager gemäß einer beispielhaften Ausführungsform der vorliegenden Erfindung. |
| Figur 4 | zeigt schematisch eine Windkraftanlage gemäß einer beispielhaften Ausführungsform der vorliegenden Erfindung. |

**Ausführungsformen der Erfindung**

In den verschiedenen Figuren sind gleiche Teile stets mit den gleichen Bezugszeichen versehen und werden daher in der Regel auch jeweils nur einmal benannt bzw. erwähnt.

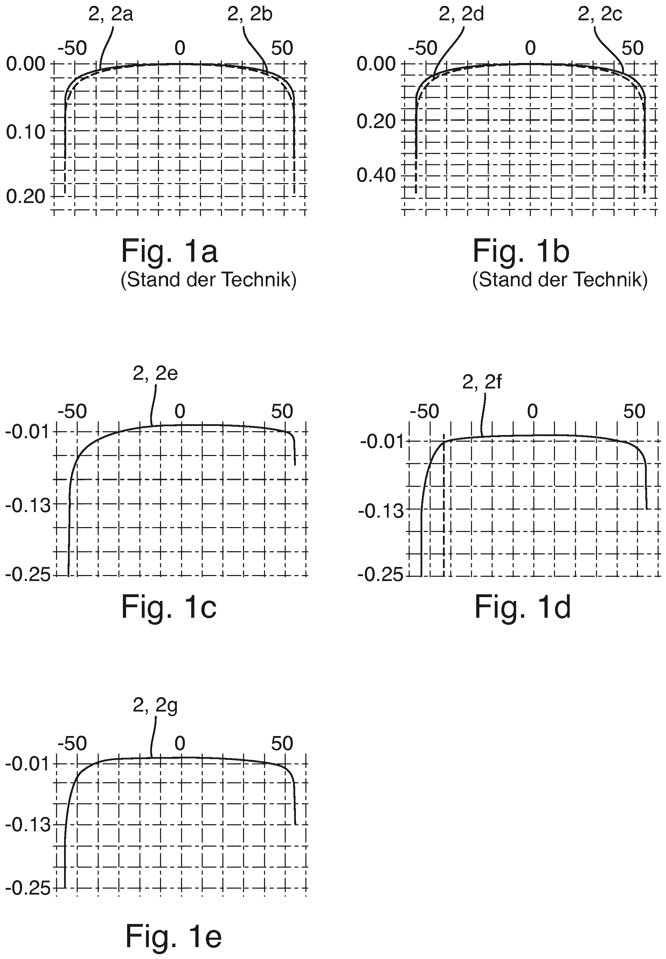

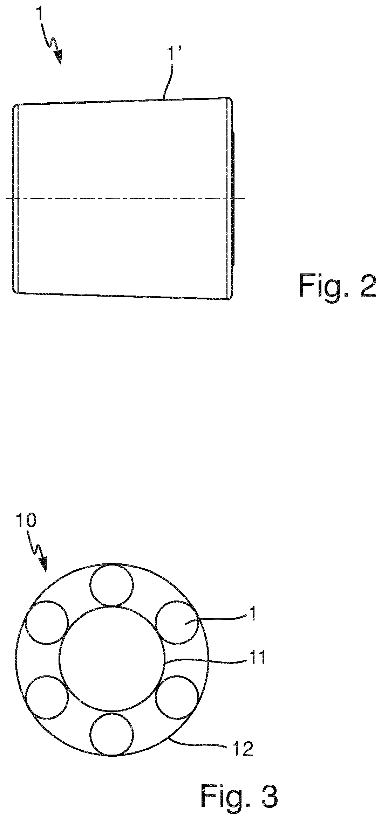

In den Figuren 1 (a) bis (e) sind jeweils Profilfunktionen 2 von Wälzkörpern 1 (siehe Figur 2) nach dem Stand der Technik sowie gemäß einer beispielhaften Ausführungsform der vorliegenden Erfindung abgebildet. Auf den jeweiligen horizontalen Achsen ist jeweils die x-Koordinate aufgetragen, wobei die Nullpunkte der x-Achsen durch die Mitten der jeweiligen effektiven Länge des Wälzkörpers 1 definiert sind. Auf den jeweiligen vertikalen Achsen ist jeweils die Profilfunktion 2 P(x) aufgetragen, wobei die Nullpunkte der vertikalen Achsen durch den jeweiligen maximalen Durchmesser der Wälzkörper 1 definiert sind. Der maximale Durchmesser $D_{we}$ der Wälzkörper 1 mit den gezeigten Profilfunktionen 2 ist jeweils $D_{we}$ = 60 mm, die effektive Länge der Wälzkörper 1 mit den gezeigten Profilfunktionen 2 ist jeweils $L_{we}$ = 108,8 mm.

Die angegebenen Längen verstehen sich jeweils in Millimeter. Die Achsenbeschriftung ist ebenfalls in Millimeter angegeben. Zur besseren Sichtbarkeit der gezeigten Eigenschaften der Profilfunktionen 2 sind die horizontalen Achsen und die vertikalen Achsen nicht gleich skaliert. Weiterhin sind die Profilfunktionen 2 nicht über ihren gesamten Bereich gezeigt, sondern jeweils abgeschnitten.

**Figur 1 (a)** zeigt die erste Profilfunktion 2a (durchgezogene Linie). Die erste Profilfunktion 2a entspricht dem Stand der Technik und wird durch die Gleichung

$$P_{2a}(x) = c_{2a} \cdot D_{we} \cdot \log \frac{1}{1 - \left(\frac{2 \cdot x}{L_{we}}\right)^2}$$

beschrieben. Der Logarithmuskoeffizient der ersten Profilfunktion 2a trägt den Wert $c_{2a}$ = 0,000214. Figur 1(a) zeigt ferner die zweite Profilfunktion 2b (gestrichelte Linie), welche ebenfalls dem Stand der Technik entspricht und durch die Gleichung

$$P_{2b}(x) = c_{2b} \cdot D_{we} \cdot \log \frac{1}{1 - \left(\frac{2 \cdot x}{L_{we}}\right)^2}$$

beschrieben wird. Der Logarithmuskoeffizient der zweiten Profilfunktion 2b trägt den Wert $c_{2b}$ = 0,0003. Deutlich zu erkennen ist, dass die erste Profilfunktion 2a flacher ist als die zweite Profilfunktion 2b. Die erste Profilfunktion 2a und die zweite Profilfunktion 2b eignen sich gut für Wälzkörper 1, welche gleichmäßig belastet und nur wenig verkippt werden, also ausschließlich im Betriebslastfall und nicht im Extremlastfall laufen. Eine Verkippung würde bei einem Wälzkörper 1 mit der ersten Profilfunktion 2a oder der zweiten Profilfunktion 2b ein Kantenlaufen und damit hohe Pressungen hervorrufen.

**Figur 1 (b)** zeigt die dritte Profilfunktion 2c (durchgezogene Linie). Die dritte Profilfunktion 2c entspricht dem Stand der Technik und wird durch die Gleichung

$$P_{2c}(x) = c_{2c} \cdot D_{we} \cdot \log \frac{1}{1 - \left(\frac{2 \cdot x}{L_{we}}\right)^2}$$

beschrieben. Der Logarithmuskoeffizient der dritten Profilfunktion 2c trägt den Wert $c_{2c}$ = 0,0005. Figur 1(b) zeigt ferner die vierte Profilfunktion 2d (gestrichelte Linie), welche ebenfalls dem Stand der Technik entspricht und durch die Gleichung

$$P_{2d}(x) = c_{2d} \cdot D_{we} \cdot \log \frac{1}{1 - \left(\frac{2 \cdot x}{L_{we}}\right)^2}$$

beschrieben wird. Der Logarithmuskoeffizient der vierten Profilfunktion 2d trägt den Wert $c_{2d}$ = 0,0007. Deutlich zu erkennen ist, dass die dritte Profilfunktion 2c flacher ist als die vierte Profilfunktion 2d. Die dritte Profilfunktion 2c und die vierte Profilfunktion 2d eignen sich gut für Wälzkörper 1, welche häufig im Extremlastfall laufen und dabei verkippt werden. Durch die steilen Verläufe der dritten Profilfunktion 2c und der vierten Profilfunktion 2d kommt es einerseits zu ertragbaren Flächenpressungen im Extremlastfall und nicht zu einem Kantenlaufen. Andererseits bieten die dritte Profilfunktion 2c und die vierte Profilfunktion 2d nur wenig Auflagefläche im Betriebslastfall und damit eine im Vergleich zu den in Figur 1(a) diskutierten Wälzkörpern 1 reduzierte Lebensdauer.

**Figur 1 (c)** zeigt die fünfte Profilfunktion 2e. Die fünfte Profilfunktion 2e wird durch die Gleichung

$$P(x) = \begin{cases} c_1 \cdot D_{we} \cdot \log \dfrac{1}{1 - \left(\frac{2 \cdot x}{L_{we}}\right)^2} & \text{für } x \leq x_{grenz} \\[3em] c_2 \cdot D_{we} \cdot \log \dfrac{1}{1 - \left(\frac{2 \cdot x}{L_{we}}\right)^2} & \text{für } x > x_{grenz} \end{cases}$$

beschrieben. $x_{grenz}$ ist hier $x_{grenz}$ = 0 mm, der erste Logarithmuskoeffizient ist $c_1$ = 0,0005 und der zweite Logarithmus-koeffizient ist $c_2$ = 0,0001. Ein Wälzkörper 1 mit der gezeigten Profilfunktion 2e ist im Bereich rechts von $x$ = 0 mm, also bei positiven x-Werten, auf eine lange Lebensdauer bei gleichmäßiger Belastung ausgelegt. Die fünfte Profilfunktion 2e bietet im Betriebslastfall eine große Lauffläche des Wälzkörpers 1 und eine dementsprechend niedrige Flächenpressung. Links von $x$ = 0 mm, also bei negativen $x$-Werten, ist ein entsprechend geformter Wälzkörper 1 durch den höheren ersten Logarithmuskoeffizienten $c_1$ = 0,0005 in der Lage, auch bei Verkippungen im Extremlastfall durch die Vermeidung von Kantenlaufen starke Flächenpressungen zu vermeiden. Allerdings bietet der Bereich zwischen $x$ = -45 mm und x = 0 mm nur wenig Lauffläche im Betriebslastfall.

**Figur 1 (d)** zeigt die sechste Profilfunktion 2f. Die sechste Profilfunktion 2f wird durch die Gleichung

$$P(x) = \begin{cases} c_1 \cdot D_{we} \cdot \log \dfrac{1}{1 - \left(\frac{2 \cdot x}{L_{we}}\right)^2} & \text{für } x \leq x_{grenz} \\[3em] c_2 \cdot D_{we} \cdot \log \dfrac{1}{1 - \left(\frac{2 \cdot x}{L_{we}}\right)^2} & \text{für } x > x_{grenz} \end{cases}$$

beschrieben. $x_{grenz}$ ist hier $x_{grenz}$ = -44 mm, dargestellt durch die gestrichelte Linie, der erste Logarithmuskoeffizienten ist $c_1$ = 0,0007 und der zweite Logarithmuskoeffizient ist $c_2$ = 0,0002. Ein Wälzkörper 1 mit der gezeigten Profilfunktion 2f ist im Bereich rechts von $x_{grenz}$, also bei x-Werten von größer als -44 mm, auf eine lange Lebensdauer bei gleichmäßiger Belastung im Betriebslastfall ausgelegt. Die sechste Profilfunktion 2f bietet im Betriebslastfall eine große Lauffläche des Wälzkörpers 1 und eine dementsprechend niedrige Flächenpressung. Links von $x_{grenz}$, also bei $x$-Werten von kleiner als -44 mm, ist ein entsprechend geformter Wälzkörper 1 durch den höheren Logarithmuskoeffizienten $c_1$ = 0,0007 in der Lage, auch bei Verkippungen durch die Vermeidung von Kantenlaufen starke Flächenpressungen zu vermeiden. Im Vergleich zu der in Figur 1 (c) gezeigten fünften Profilfunktion 2e bietet ein Wälzkörper 1 mit einem der sechsten Profilfunktion 2f entsprechenden Profil 1' (siehe Figur 2) mehr Kontaktfläche im Betriebslastfall und ermöglicht damit eine lange Lebensdauer.

**Figur 1 (e)** zeigt die gemäß einer beispielhaften Ausführungsform der vorliegenden Erfindung ausgebildete siebte Profilfunktion 2g. Die siebte Profilfunktion 2g wird durch die Gleichung

$$P(x) = \begin{cases} c_1 \cdot D_{we} \cdot \log \dfrac{1}{1 - \left(\frac{2 \cdot x}{L_{we}}\right)^2} & \text{für } x \leq x_{grenz} \\[3em] c_2 \cdot D_{we} \cdot \log \dfrac{1}{1 - \left(\frac{2 \cdot x}{L_{we}}\right)^2} & \text{für } x > x_{grenz} \end{cases}$$

beschrieben. Der erste Logarithmuskoeffizient $c_1$ genügt hier der Gleichung

$$c_1(x) = \frac{c_{basis}}{1 + \dfrac{\frac{c_{basis}}{c_2} - 1}{S_k} * (k * x + a)}$$

Mit $k = 1{,}838239$, $S_k = 40$, $c_{basis} = 0{,}0007$ und dem zweiten Logarithmuskoeffizienten $c_2 = 0{,}0002$. Ein Wälzkörper 1 mit einem der siebten Profilfunktion 2g entsprechenden Profil 1' ist sowohl für hohe Lebensdauern im Betriebslastfall als auch im Bereich negativer x-Werte für Belastungen im Extremlastfall ausgelegt. Die dargestellte siebte Profilfunktion 2g ermöglicht also eine hohe Lebensdauer des Wälzkörpers 1 und vermeidet Kantenlaufen und hohe Flächenpressungen. Insbesondere vermeidet die siebte Profilfunktion 2g harte Übergänge und Knicke an der der Stelle $x_{grenz}$, was sich positiv auf die Lebensdauer eines entsprechend geformten Wälzkörpers 1 auswirkt.

In **Figur 2** ist schematisch ein Wälzkörper 1 gemäß einer beispielhaften Ausführungsform der vorliegenden Erfindung dargestellt. Der Wälzkörper 1 weist das Profil 1' auf, welches der in Figur 1 (e) gezeigten siebten Profilfunktion 2g genügt. Trotz der durch die siebte Profilfunktion 2g deutlich verbesserten Eigenschaften des Wälzkörpers 1, ist diese mit dem bloßen Auge kaum zu erkennen.

**Figur 3** zeigt schematisch ein Wälzlager 10 gemäß einer beispielhaften Ausführungsform der vorliegenden Erfindung. Das Wälzlager 10 weist den Innenring 11, den Außenring 12 und die Wälzkörper 1 auf. Die Wälzkörper 1 weisen ihrerseits das Profil 1' auf, welches der in Figur 1 (e) gezeigten siebten Profilfunktion 2g genügt.

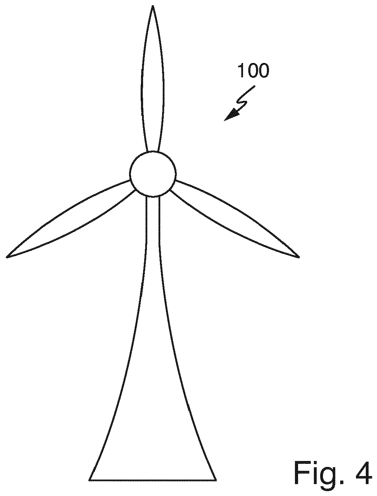

**Figur 4** zeigt schematisch eine Windkraftanlage 100 gemäß einer beispielhaften Ausführungsform der vorliegenden Erfindung. Die Windkraftanlage 100 weist das Wälzlager 10 (siehe Figur 3) mit den Wälzkörpern 1 (siehe Figur 2) auf, welche wiederum das Profil 1' (siehe Figur 2) aufweisen, wobei das Profil 1' der in Figur 1 (e) gezeigten siebten Profilfunktion 2g genügt.

## Bezugszeichenliste

| | |
|---|---|
| 1 | Wälzkörper |
| 1' | Profil |
| 2 | Profilfunktion |
| 2a | Erste Profilfunktion |
| 2b | Zweite Profilfunktion |
| 2c | Dritte Profilfunktion |
| 2d | Vierte Profilfunktion |
| 2e | Fünfte Profilfunktion |
| 2f | Sechste Profilfunktion |
| 2g | Siebte Profilfunktion |
| 10 | Wälzlager |
| 11 | Innenring |
| 12 | Außenring |
| 100 | Windkraftanlage |

## Patentansprüche

1. Wälzkörper (1) zur Verwendung in Wälzlagern (10), insbesondere in Großwälzlagern, wobei der Wälzkörper (1) im unbelasteten Zustand ein logarithmisches Profil (1') aufweist, wobei das Profil (1') zumindest teilweise der Profilfunktion (2)

$$P(x) = \begin{cases} c_1 \cdot D_{we} \cdot \log \dfrac{1}{1 - \left(\dfrac{2 \cdot x}{L_{we}}\right)^2} & \text{für } x \leq x_{grenz} \\[4mm] c_2 \cdot D_{we} \cdot \log \dfrac{1}{1 - \left(\dfrac{2 \cdot x}{L_{we}}\right)^2} & \text{für } x > x_{grenz} \end{cases}$$

genügt, wobei $D_{we}$ dem maximalen Durchmesser des Wälzkörpers (1) entspricht und $L_{we}$ der effektiven Länge des Wälzkörpers (1) entspricht, wobei $c_1$ ein erster Logarithmuskoeffizient ist, wobei $c_2$ ein zweiter Logarithmuskoeffizient ist, wobei $x_{grenz}$ eine Übergangskonstante ist, und die x-Koordinate parallel zur Drehachse des Wälzkörpers verläuft, **dadurch gekennzeichnet, dass** $c_1$ und $c_2$ unterschiedliche Werte aufweisen, wobei der erste Logarithmuskoeffizient $c_1$ eine von x abhängige Funktion $c_1 = c_1(x)$ ist.

**2.** Wälzkörper (1) gemäß Anspruch 1, wobei die Übergangskonstante $x_{grenz}$ ungleich 0 ist.

**3.** Wälzkörper (1) gemäß Anspruch 1 oder 2, wobei der erste Logarithmuskoeffizient $c_1$ abhängig vom zweiten Logarithmuskoeffizienten $c_2$ ist.

**4.** Wälzkörper (1) gemäß Anspruch 3, wobei der erste Logarithmuskoeffizient $c_1$ der Funktion

$$c_1(x) = \frac{c_{basis}}{1 + \frac{\frac{c_{basis}}{c_2} - 1}{S_k} * (k * x + a)}$$

genügt, wobei $S_k$, $k$, $a$ und $c_{basis}$ Konstanten sind.

**5.** Wälzkörper (1) gemäß Anspruch 4, wobei $c_2$ und $c_{basis}$ ungleich eines Referenzlogarithmuskoeffizienten $c_0$ von 0,00045 sind.

**6.** Wälzkörper (1) gemäß Anspruch 4, wobei $c_2$ zwischen 0,00005 und 0,0004, vorzugsweise zwischen 0,0001 und 0,0003 und besonders bevorzugt bei im Wesentlichen 0,0002 liegt.

**7.** Wälzkörper (1) gemäß einem der Ansprüche 4 bis 5, wobei $c_{basis}$ zwischen 0,0005 und 0,0009, vorzugsweise zwischen 0,0006 und 0,0008 und besonders bevorzugt im Wesentlichen bei 0,0007 liegt

und/oder $k$ zwischen 1,6 und 2,1, bevorzugt zwischen 1,75 und 1,95 und besonders bevorzugt im Wesentlichen bei 1,838239 liegt und/oder $S_k$ zwischen 20 und 80, vorzugsweise zwischen 30 und 50 und besonders bevorzugt im Wesentlichen bei 40 liegt
und/oder $a$ zwischen 50 und 200, bevorzugt zwischen 80 und 150 und besonders bevorzugt im Wesentlichen bei 101 liegt.

**8.** Wälzlager (10), insbesondere Großwälzlager, aufweisend einen Außenring (12) und einen zumindest teilweise innerhalb des Außenrings (11) gelagerten Innenring (11), wobei der Außenring (12) und der Innenring (11) um eine Drehachse relativ zueinander drehbar sind, wobei zwischen dem Außenring (12) und dem Innenring (11) Wälzkörper (1) gemäß einem der vorhergehenden Ansprüche angeordnet sind.

**9.** Verfahren zur geometrischen Dimensionierung eines Wälzkörpers (1) für Wälzlager (10), insbesondere eines Wälzkörpers (1) für Großwälzlager, wobei als Profil des Wälzkörpers (1) im unbelasteten Zustand ein logarithmisches Profil (1') gewählt wird, wobei als Profilfunktion (2) zumindest eines Teils des Profils (1')

$$P(x) = \begin{cases} c_1 \cdot D_{we} \cdot \log \dfrac{1}{1 - \left(\frac{2 \cdot x}{L_{we}}\right)^2} & \text{für } x \leq x_{grenz} \\[3em] c_2 \cdot D_{we} \cdot \log \dfrac{1}{1 - \left(\frac{2 \cdot x}{L_{we}}\right)^2} & \text{für } x > x_{grenz} \end{cases}$$

gewählt wird, wobei $D_{we}$ dem maximalen Durchmesser des Wälzkörpers (1) entspricht und $L_{we}$ der effektiven Länge des Wälzkörpers (1) entspricht, wobei $c_1$ ein erster Logarithmuskoeffizient ist, wobei $c_2$ ein zweiter Logarithmuskoeffizient ist, wobei $x_{grenz}$ eine Übergangskonstante ist, und die x-Koordinate parallel zur Drehachse des Wälzkörpers verläuft, **dadurch gekennzeichnet, dass** für $c_1$ und $c_2$ unterschiedliche, auf zu erwartende Belastungssituationen angepasste Werte gewählt werden, wobei für den ersten Logarithmuskoeffizienten $c_1$ eine von $x$ abhängige Funktion $c_1 = c_1(x)$ gewählt wird.

**10.** Verfahren gemäß Anspruch 9, wobei die Übergangskonstante $x_{grenz}$ ungleich 0 gewählt wird und wobei die Übergangskonstante $x_{grenz}$ auf zu erwartende Belastungssituationen angepasst wird.

**11.** Verfahren gemäß einem der Ansprüche 9 bis 10, wobei für den ersten Logarithmuskoeffizienten $c_1$ eine vom zweiten Logarithmuskoeffizienten $c_2$ abhängige Funktion gewählt wird.

**12.** Verfahren gemäß einem der Ansprüche 9 bis 11, wobei der erste Logarithmuskoeffizient $c_1$ als der Funktion

$$c_1(x) = \frac{c_{basis}}{1 + \frac{\frac{c_{basis}}{c_2} - 1}{S_k} * (k * x + a)}$$

genügend gewählt wird, wobei $S_k$, $k$, $a$ und $c_{basis}$ Konstanten sind.

**13.** Windkraftanlage (100) aufweisend ein Wälzlager (10) gemäß Anspruch 8.

**Claims**

**1.** Rolling element (1) for use in rolling element bearings (10), in particular in large rolling element bearings, wherein the rolling element (1) has a logarithmic profile (1') in the unloaded state, wherein the profile (1') at least partly satisfies the profile function (2)

$$P(x) = \begin{cases} c_1 \cdot D_{we} \cdot \log \frac{1}{1 - \left(\frac{2 \cdot x}{L_{we}}\right)^2} & \text{for } x \le x_{grenz} \\ c_2 \cdot D_{we} \cdot \log \frac{1}{1 - \left(\frac{2 \cdot x}{L_{we}}\right)^2} & \text{for } x > x_{grenz} \end{cases}$$

where $D_{we}$ corresponds to the maximum diameter of the rolling element (1) and $L_{we}$ corresponds to the effective length of the rolling element (1), $c_1$ is a first logarithmic coefficient, $c_2$ is a second logarithmic coefficient, where $x_{grenz}$ is a transition constant, and the x coordinate extends parallel to the axis of rotation of the rolling element, **characterized in that** $c_1$ and $c_2$ have different values, the first logarithmic coefficient $c_1$ being a function $c_1 = c_1(x)$ dependent on x.

**2.** Rolling element (1) according to Claim 1, wherein the transition constant $x_{grenz}$ is not equal to 0.

**3.** Rolling element (1) according to Claim 1 or 2, wherein the first logarithmic coefficient $c_1$ depends on the second logarithmic coefficient $c_2$,

**4.** Rolling element (1) according to Claim 3, wherein the first logarithmic coefficient $c_1$ satisfies the function

$$c_1(x) = \frac{c_{basis}}{1 + \frac{\frac{c_{basis}}{c_2} - 1}{S_k} * (k * x + a)}$$

where $S_k$, $k$, $a$, and $c_{basis}$ are constants.

**5.** Rolling element (1) according to Claim 4, wherein $c_2$ and $c_{basis}$ are not equal to a reference logarithmic coefficient $c_0$ of 0.00045.

**6.** Rolling element (1) according to Claim 4, wherein $c_2$ lies between 0.00005 and 0.0004, preferably between 0.0001 and 0.0003 and particularly preferably is essentially 0.0002.

7. Rolling element (1) according to one of Claims 4 to 5, wherein $c_{basis}$ lies between 0.0005 and 0.0009, preferably between 0.0006 and 0.0008, and particularly preferably is essentially 0.0007,

   and/or $k$ lies between 1.6 and 2.1, preferably between 1.75 and 1.95 and particularly preferably is essentially 1.838239,
   and/or $S_k$ lies between 20 and 80, preferably between 30 and 50 and particularly preferably is essentially 40,
   and/or a lies between 50 and 200, preferably between 80 and 150 and particularly preferably is essentially 101.

8. Rolling element bearing (10), in particular large rolling element bearing, having an outer ring (12) and an inner ring (11) at least partly supported within the outer ring (11), wherein the outer ring (12) and the inner ring (11) are rotatable around an axis of rotation relative to one another, wherein rolling elements (1) according to one of the preceding claims are arranged between the outer ring (12) and the inner ring (11).

9. Method for geometrically dimensioning a rolling element (1) for rolling element bearings (10), in particular a rolling element (1) for large rolling element bearings, wherein, as a profile of the rolling element (1) in the unloaded state, a logarithmic profile (1') is chosen, wherein at least part of the profile (1')

$$P(x) = \begin{cases} c_1 \cdot D_{we} \cdot \log \dfrac{1}{1 - \left(\frac{2 \cdot x}{L_{we}}\right)^2} & \text{for } x \leq x_{grenz} \\[4mm] c_2 \cdot D_{we} \cdot \log \dfrac{1}{1 - \left(\frac{2 \cdot x}{L_{we}}\right)^2} & \text{for } x > x_{grenz} \end{cases}$$

   is chosen as a profile function (2), where $D_{we}$ corresponds to the maximum diameter of the rolling element (1) and $L_{we}$ corresponds to the effective length of the rolling element (1), where $c_1$ is a first logarithmic coefficient, where $c_2$ is a second logarithmic coefficient, where $x_{grenz}$ is a transition constant, and the x coordinate extends parallel to the axis of rotation of the rolling element, **characterized in that** different values matched to expected loading situations are chosen for $c_1$ and $c_2$, wherein a function $c_1 = c_1 (x)$ dependent on x is chosen for the first logarithmic coefficient $c_1$.

10. Method according to Claim 9, wherein the transition constant $x_{grenz}$ not equal to 0 is chosen and wherein the transition constant $x_{grenz}$ is matched to expected loading situations.

11. Method according to one of Claims 9 to 10, wherein a function dependent on the second logarithmic coefficient $c_2$ is chosen for the first logarithmic coefficient $c_1$.

12. Method according to one of Claims 9 to 11, wherein the first logarithmic coefficient $c_1$ is chosen as satisfying the function

$$c_1(x) = \frac{c_{basis}}{1 + \dfrac{\frac{c_{basis}}{c_2} - 1}{S_k} * (k * x + a)}$$

   where $S_k$, $k$, $a$, and $c_{basis}$ are constants.

13. Wind turbine (100) having a rolling element bearing (10) according to Claim 8.

**Revendications**

1. Élément roulant (1) destiné à être utilisé dans des paliers à rouleaux (10), en particulier dans des paliers à rouleaux de grandes dimensions, l'élément roulant (1) présentant un profil logarithmique (1') à l'état non chargé, le profil (1') satisfaisant au moins partiellement à la fonction de profil (2),

$$P(x) = \begin{cases} c_1 \cdot D_{we} \cdot \log \dfrac{1}{1 - \left(\dfrac{2 \cdot x}{L_{we}}\right)^2} & pour\ x \leq x_{grenz} \\[4ex] c_2 \cdot D_{we} \cdot \log \dfrac{1}{1 - \left(\dfrac{2 \cdot x}{L_{we}}\right)^2} & pour\ x > x_{grenz} \end{cases}$$

$D_{we}$ correspondant au diamètre maximal de l'élément roulant (1) et $L_{we}$ correspondant à la longueur utile de l'élément roulant (1), $c_1$ étant un premier coefficient logarithmique, $c_2$ étant un deuxième coefficient logarithmique, $x_{grenz}$ étant une constante de transition et l'abscisse étant parallèle à l'axe de rotation de l'élément roulant, **caractérisé en ce que** $c_1$ et $c_2$ ont des valeurs différentes, le premier coefficient logarithmique $c_1$ étant une fonction dépendante de x $c_1 = c_1(x)$.

2. Élément roulant (1) selon la revendication 1, la constante de transition $x_{grenz}$ étant différente de 0.

3. Élément roulant (1) selon la revendication 1 ou 2, le premier coefficient logarithmique $c_1$ dépendant du deuxième coefficient logarithmique $c_2$.

4. Élément roulant (1) selon la revendication 3, le premier coefficient logarithmique $c_1$ satisfaisant à la fonction

$$c_1(x) = \frac{c_{basis}}{1 + \dfrac{\dfrac{c_{basis}}{c_2} - 1}{S_k} * (k * x + a)}$$

$S_k$, k, a et $c_{basis}$ étant des constantes.

5. Élément roulant (1) selon la revendication 4, $c_2$ et $c_{basis}$ n'étant pas égaux à un coefficient logarithmique de référence $c_0$ de 0,00045.

6. Élément roulant (1) selon la revendication 4, $c_2$ étant compris entre 0,00005 et 0,0004, de préférence entre 0,0001 et 0,0003 et le plus préférablement étant sensiblement de 0,0002.

7. Élément roulant (1) selon l'une des revendications 4 à 5, $c_{basis}$ étant compris entre 0, 0005 et 0,0009, de préférence entre 0,0006 et 0,0008 et de manière particulièrement préférée étant sensiblement de 0,0007 et/ou k étant compris entre 1,6 et 2,1, de préférence entre 1,75 et 1,95 et de manière particulièrement préférée étant sensiblement de 1,838239 et/ou $S_k$ étant compris entre 20 et 80, de préférence entre 30 et 50 et de manière particulièrement préférée étant sensiblement de 40 et/ou a étant compris entre 50 et 200, de préférence entre 80 et 150 et de manière particulièrement préférée étant sensiblement de 101.

8. Palier à rouleaux (10), notamment palier à rouleaux de grande dimension, comportant une bague extérieure (12) et une bague intérieure (11) montées au moins partiellement à l'intérieur de la bague extérieure (11), la bague extérieure (12) et la bague intérieure (11) pouvant tourner les uns par rapport aux autres autour d'un axe de rotation, des éléments roulants (1) selon l'une des revendications précédentes étant disposés entre la bague extérieure (12) et la bague intérieure (11).

9. Procédé de dimensionnement géométrique d'un élément roulant (1) destiné à des paliers à rouleaux (10), en particulier d'un élément roulant (1) destiné à des paliers à rouleaux de grandes dimensions, un profil logarithmique (1') étant choisi comme profil de l'élément roulant (1) à l'état non chargé, le profil (1') satisfaisant au moins partiellement à la fonction de profil (2),

$$P(x) = \begin{cases} c_1 \cdot D_{we} \cdot log \dfrac{1}{1 - \left(\dfrac{2 \cdot x}{L_{we}}\right)^2} \; pour \; x \leq x_{grenz} \\[4ex] c_2 \cdot D_{we} \cdot log \dfrac{1}{1 - \left(\dfrac{2 \cdot x}{L_{we}}\right)^2} \; pour \; x > x_{grenz} \end{cases}$$

$D_{we}$ correspondant au diamètre maximal de l'élément roulant (1) et $L_{we}$ correspondant à la longueur utile de l'élément roulant (1), $c_1$ étant un premier coefficient logarithmique, $c_2$ étant un deuxième coefficient logarithmique, $x_{grenz}$ étant une constante de transition et l'abscisse étant parallèle à l'axe de rotation de l'élément roulant, **caractérisé en ce que** différentes valeurs, adaptées à des situations de charge à prévoir, sont choisies pour $c_1$ et $c_2$, une fonction dépendante de x $c_1 = c_1(x)$ étant choisie pour le premier coefficient logarithmique $c_1$.

10. Procédé selon la revendication 9, la constante de transition $x_{grenz}$ étant choisie pour être différente de 0 et la constante de transition $x_{grenz}$ étant adaptée aux situations de charge prévues.

11. Procédé selon l'une des revendications 9 à 10, une fonction dépendant du deuxième coefficient logarithmique $c_2$ étant choisie pour le premier coefficient logarithmique $c_1$.

12. Procédé selon l'une des revendications 9 à 11, le premier coefficient logarithmique $c_1$ étant choisi comme satisfaisant à la fonction

$$c_1(x) = \frac{c_{basis}}{1 + \dfrac{\dfrac{c_{basis}}{c_2} - 1}{S_k} * (k * x + a)}$$

$S_k$, k, a et $c_{basis}$ étant des constantes.

13. Éolienne (100) comportant un palier à rouleaux (10) selon la revendication 8.

Fig. 1a
(Stand der Technik)

Fig. 1b
(Stand der Technik)

Fig. 1c

Fig. 1d

Fig. 1e

Fig. 2

Fig. 3

100

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006052789 A